# EUROPEAN PATENT APPLICATION

(11) **EP 4 529 236 A1**
(43) Date of publication of application: **26.03.2025**
(21) Application number: 23834698.5
(22) Date of filing: 29.06.2023
(51) Int. Cl.: H04W 4/06

(54) **COMMUNICATION METHOD AND DEVICE, AND SYSTEM**

(30) Priority: 08.07.2022 CN 202210799533; 27.09.2022 CN 202211186639
(71) Applicant: Huawei Technologies Co., Ltd., Shenzhen, Guangdong 518129 (CN)
(72) Inventor: DENG, Ruinan, Shenzhen, Guangdong 518129 (CN); RUAN, Wei, Shenzhen, Guangdong 518129 (CN)
(74) Representative: Pfenning, Meinig & Partner mbB
(86) International application number: PCT/CN2023/103600
(87) International publication number: WO 2024/007930

(57) **Abstract**

This application provides a communication method and system, and a device. According to the communication method and system, and the device in this application, a network capacity and transmission efficiency of Wi-Fi networking can be improved, an area and power consumption of a chip during networking can be reduced, and a network structure can be simplified. The method includes: A sending device sends M first identifiers to M receiving devices in N receiving devices, and transmits, through a data frame, data to the M receiving devices corresponding to the M first identifiers. The sending device is communicatively connected to the N receiving devices, and the N receiving devices are not communicatively connected to each other. The M first identifiers one-to-one correspond to the M receiving devices, the M first identifiers identify the M receiving devices, and the N receiving devices include the M receiving devices. N is an integer greater than or equal to 1, and M is a positive integer less than or equal to N.

## Description

This application claims priorities to Chinese Patent Application No. 202210799533.5, filed with the China National Intellectual Property Administration on July 8, 2022 and entitled "COMMUNICATION METHOD AND SYSTEM, AND DEVICE", and to Chinese Patent Application No. 202211186639.4, filed with the China National Intellectual Property Administration on September 27, 2022 and entitled "COMMUNICATION METHOD AND SYSTEM, AND DEVICE", both of which are incorporated herein by reference in their entireties.

### TECHNICAL FIELD

This application relates to the wireless communication field, and more specifically, to a communication method and system, and a device.

### BACKGROUND

A current wireless networking solution for a Wi-Fi system is a repeater (repeater) mode, and uses a dual-entity solution of a virtual access point (soft access point, SoftAP). One repeater has two physical entities: terminal (station, STA) and SoftAP. A media access control (media access control, MAC) address of the STA is different from a MAC address of the SoftAP.

When the repeater serves as the STA, the repeater can receive only data of an upper-level route, and a single user (single user, SU) frame or a trigger based (trigger based, TB) frame is used for backhaul. When the repeater serves as the AP, the repeater can transmit data only with a lower-level STA or SoftAP. The two entities cannot work together when the two entities work in a same frequency and on a same channel.

Such a networking structure needs to occupy an air interface twice, reducing a capacity of an entire network. In addition, the repeater needs to create the two physical entities, increasing an area of a chip and power consumption of the chip.

### SUMMARY

This application provides a communication method and system, and a device. According to the communication method and system, and the device in this application, a network capacity and transmission efficiency of Wi-Fi networking can be significantly improved, an area and power consumption of a chip during networking can be reduced, and a network structure can be simplified.

According to a first aspect, an embodiment of this application provides a communication method. The method may be performed by a sending device or a component (such as a chip or a chip system) in a sending device. This is not limited in this application. The method includes: A sending device sends M first identifiers to M receiving devices in N receiving devices, where the M first identifiers one-to-one correspond to the M receiving devices, the M first identifiers identify the M receiving devices, the N receiving devices include the M receiving devices, N is an integer greater than or equal to 1, and M is a positive integer less than or equal to N; and the sending device transmits, through a data frame, data to the M receiving devices corresponding to the M first identifiers, where the sending device is communicatively connected to the N receiving devices, and the N receiving devices are not communicatively connected to each other.

For example, in this embodiment of this application, that the sending device is communicatively connected to the N receiving devices may be that data transmission may be performed between the sending device and the N receiving devices in a wireless or another communication manner, that is, there are communication links between the sending device and the N receiving devices. That the N receiving devices are not communicatively connected to each other may be that the N receiving devices cannot perform data transmission with each other in a wireless manner or another communication manner, that is, there is no communication link between the N receiving devices. A communication manner between the sending device and the N receiving devices is not limited in this application.

Based on this solution, according to the communication method provided in this embodiment of this application, the sending device sends the first identifiers to the receiving devices, so that when sending device communicates with the receiving devices, the sending device can perform, through the data frame, bidirectional communication based on the first identifiers. In addition, a network capacity can be improved through bidirectional communication.

With reference to the first aspect, in some implementations of the first aspect, the first identifier is an association identifier AID code.

Based on the first identifier of the AID code, a device that receives the AID code does not need to parse physical layer data, thereby improving data transmission efficiency.

With reference to the first aspect, in some implementations of the first aspect, the data frame is a frequency division multiplexing data frame.

With reference to the first aspect, in some implementations of the first aspect, a frame format of the data frame includes an orthogonal frequency division multiple access OFDMA frame format and a frame format combining OFDMA and multi-user multiple-input multiple-output MUMIMO.

The frequency division multiplexing data frame is used, so that bidirectional communication between the receiving devices and the sending device is implemented, an area and power consumption of a chip during networking are further reduced, and a network structure is simplified.

With reference to the first aspect, in some implementations of the first aspect, the method further includes: The sending device allocates, to each of the M receiving devices, the first identifier corresponding to the receiving device.

Based on this solution, the sending device allocates the first identifiers to the receiving devices. This can avoid a conflict caused by identifier repetition because a plurality of receiving devices autonomously and randomly generate first identifiers, and improve system performance.

With reference to the first aspect, in some implementations of the first aspect, the sending device is a routing device or an access point AP device.

Based on this solution, a router or an AP allocates a first identifier to a lower-level receiving device connected to the router or the AP. This can implement layer-by-layer allocation, and improve transmission efficiency. Further, allocation of first identifiers can be distributed to each layer for implementation through layer-by-layer allocation, thereby improving system transmission reliability.

With reference to the first aspect, in some implementations of the first aspect, the method further includes: The sending device sends a second identifier to the M receiving devices, where the second identifier is an identifier corresponding to the sending device.

Based on this solution, the sending device sends the identifier of the sending device to the receiving devices, so that the receiving devices can send uplink data to the sending device based on the second identifier, thereby improving transmission performance of a system.

According to a second aspect, an embodiment of this application provides a communication method. The method may be performed by a receiving device or a component (such as a chip or a chip system) in a receiving device. This is not limited in this application. The method includes: The receiving device receives a first identifier from a sending device, where the first identifier corresponds to the receiving device, and the first identifier identifies the receiving device; and the receiving device transmits data to the sending device through a data frame.

With reference to the second aspect, in some implementations of the second aspect, the first identifier is an association identifier AID code.

With reference to the second aspect, in some implementations of the second aspect, the data frame is a frequency division multiplexing data frame.

With reference to the second aspect, in some implementations of the second aspect, a frame format of the data frame includes an orthogonal frequency division multiple access OFDMA frame format and a frame format combining OFDMA and multi-user multiple-input multiple-output MUMIMO.

With reference to the second aspect, in some implementations of the second aspect, the first identifier is allocated by the sending device to the receiving device.

With reference to the second aspect, in some implementations of the second aspect, the receiving device is an access point AP device or a terminal STA device.

With reference to the second aspect, in some implementations of the second aspect, the method further includes: The receiving device receives a second identifier from the sending device, where the second identifier is an identifier corresponding to the sending device.

According to a third aspect, an embodiment of this application provides a communication system. The communication system includes a plurality of receiving devices. The plurality of receiving devices are communicatively connected to a sending device, and the plurality of receiving devices are not communicatively connected to each other. The plurality of receiving devices are configured to perform the method provided in any one of the second aspect and the implementations of the second aspect.

According to a fourth aspect, an embodiment of this application provides a communication apparatus. The apparatus is configured to perform the method provided in the first aspect. Specifically, the communication apparatus may include a unit and/or a module configured to perform the method provided in any one of the first aspect or the foregoing implementations of the first aspect, for example, a processing unit and an obtaining unit.

In an implementation, the communication apparatus is a sending device. The obtaining unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a sending device. The obtaining unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fifth aspect, an embodiment of this application provides a communication apparatus. The apparatus is configured to perform the method provided in the second aspect. Specifically, the communication apparatus may include a unit and/or a module configured to perform the method provided in any one of the second aspect or the foregoing implementations of the second aspect, for example, a processing unit and an obtaining unit.

In an implementation, the communication apparatus is a receiving device. The obtaining unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a receiving device. The obtaining unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, an embodiment of this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, an embodiment of this application provides a computer-readable storage medium. The computer-readable storage medium stores program code executed by a device, and the program code is used to perform the method provided in any one of the first aspect or the second aspect and the implementations of the first aspect or the second aspect.

According to an eighth aspect, an embodiment of this application provides a computer program product including instructions. When the computer program product runs on a computer, the computer is enabled to perform the method provided in any one of the first aspect or the second aspect and the implementations of the first aspect or the second aspect.

According to a ninth aspect, an embodiment of this application provides a chip. The chip includes a processor and a communication interface. The processor reads, through the communication interface, instructions stored in a memory, to perform the method provided in any one of the first aspect or the second aspect and the implementations of the first aspect or the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the first aspect or the second aspect and the implementations of the first aspect or the second aspect.

According to a tenth aspect, an embodiment of this application provides a communication system, including the communication apparatus according to the fourth aspect and the data transmission apparatus according to the fifth aspect.

According to an eleventh aspect, an embodiment of this application provides a communication method. The method may be performed by a first device, and the first device is a sending device. Alternatively, the method may be performed by a chip or a circuit configured in the first device. This is not limited in this application. The method includes: The first device sends at least one first identifier to at least one second device, where each of the at least one first identifier identifies that the first device is connected to the at least one second device, the at least one first identifier one-to-one corresponds to the at least one second device, the first device is connected to the at least one second device, and there is no connection relationship between the at least one second device; and the first device sends, based on the first identifier, data to the second device corresponding to the first identifier.

With reference to the eleventh aspect, in some implementations of the eleventh aspect, the first identifier is an association identifier AID code.

With reference to the eleventh aspect, in some implementations of the eleventh aspect, the method further includes: The first device allocates, to each of the at least one second device, the first identifier corresponding to the second device.

With reference to the eleventh aspect, in some implementations of the eleventh aspect, the first device is a routing device or an access point AP device.

With reference to the eleventh aspect, in some implementations of the eleventh aspect, the method further includes: The first device sends a second identifier to the at least one second device, where the second identifier is a unique identifier used when the first device is connected to the at least one second device.

According to a twelfth aspect, an embodiment of this application provides a communication device. The device includes a transceiver module. The transceiver module is configured to send at least one first identifier to at least one second device, where each of the at least one first identifier identifies that the device is connected to the at least one second device, the at least one first identifier one-to-one corresponds to the at least one second device, the device is connected to the at least one second device, and there is no connection relationship between the at least one second device. The transceiver module is further configured to send, based on the first identifier, data to the second device corresponding to the first identifier.

With reference to the twelfth aspect, in some implementations of the twelfth aspect, the first identifier is an association identifier AID code.

With reference to the twelfth aspect, in some implementations of the twelfth aspect, the device further includes a processing module. The processing module is configured to allocate, to each of the at least one second device, the first identifier corresponding to the second device.

With reference to the twelfth aspect, in some implementations of the twelfth aspect, the device is a routing device or an access point AP device.

With reference to the twelfth aspect, in some implementations of the twelfth aspect, the transceiver module is further configured to send a second identifier to the at least one second device, where the second identifier is a unique identifier used when the device is connected to the at least one second device.

### BRIEF DESCRIPTION OF DRAWINGS

FIG. 1 is a diagram of a network structure according to an embodiment of this application;
FIG. 2 is a schematic interaction flowchart of a communication method 200 according to an embodiment of this application;
FIG. 3 is a first diagram of network association according to an embodiment of this application;
FIG. 4 is a second diagram of network association according to an embodiment of this application;
FIG. 5 is a first diagram of a structure of data communication according to an embodiment of this application;
FIG. 6 is a second diagram of a structure of data communication according to an embodiment of this application;
FIG. 7 is a third diagram of a structure of data communication according to an embodiment of this application;
FIG. 8 is a block diagram of a communication apparatus 1000 according to this application; and
FIG. 9 is a diagram of a structure of a communication apparatus 10 according to this application.

### DESCRIPTION OF EMBODIMENTS

The following describes technical solutions in embodiments of this application with reference to accompanying drawings.

Embodiments of this application may be applied to a wireless local area network (wireless local area network, WLAN). Currently, a standard used by the WLAN is the Institute of Electrical and Electronics Engineering (institute of electrical and electronics engineer, IEEE) 802.11 series. The WLAN may include a plurality of basic service sets (basic service set, BSS), and network nodes in the BSS include a STA and an AP. Each BSS may include one AP and a plurality of STAs associated with the AP.

An AP in embodiments of this application may also be referred to as a wireless access point, a hotspot, or the like. The AP is an access point through which a mobile user accesses a wired network, and is mainly deployed in a home, inside a building, and in a campus, with a typical coverage radius of tens of meters to hundreds of meters. Certainly, the AP may alternatively be deployed outdoors. The AP is equivalent to a bridge that connects a wired network and a wireless network, and a main function of the AP is to connect wireless network clients together, and then connect the wireless network to the Ethernet. Specifically, the AP may be a terminal device or a network device with a wireless fidelity (wireless fidelity, Wi-Fi) chip. Optionally, the AP may be a device that supports a plurality of WLAN standards such as 802.11a/b/g, 802.11n, 802.11ac, 802.11ax, and 802.11be or a later version that is currently being discussed.

The access point in this application may be a high efficient (high efficient, HE) STA, an extremely high throughput (extremely high throughput, EHT) STA, or a STA applicable to a future generation Wi-Fi standard.

For example, the access point and the station may be devices used in an internet of vehicles, internet of things nodes and sensors in an internet of things (IoT, internet of things), or the like, may be smart cameras, smart remote controls, or smart water/electricity meters in a smart home, or may be sensors in a smart city.

A STA in embodiments of this application may be a wireless communication chip, a wireless sensor, or a wireless communication terminal, for example, a mobile phone, a tablet computer, a set-top box, a smart television, a smart wearable device, a vehicle-mounted communication device, or a computer that supports a Wi-Fi communication function. Optionally, the STA may support the 802.11ax standard. Further, optionally, the STA supports a plurality of WLAN standards such as 802.11ac, 802.11n, 802.11g, 802.11b, and 802.11a, or a later version.

In embodiments of this application, the STA or the AP includes a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of the method provided in embodiments of this application is not particularly limited in embodiments of this application, provided that a program that records code of the method provided in embodiments of this application can be run to perform communication according to the method provided in embodiments of this application. For example, the method provided in embodiments of this application may be performed by a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, include, and/or carry instructions and/or data.

Embodiments of this application may be further applicable to a wireless local area network system such as an internet of things (internet of things, IoT) network or a vehicle-to-everything (Vehicle to X, V2X). Certainly, embodiments of this application may be further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are only examples for description, and communication systems applicable to this application are not limited thereto. This is uniformly described herein, and details are not described below again.

A current wireless networking solution for a Wi-Fi system is a repeater mode, and uses a dual-entity solution of a SoftAP. One repeater has two physical entities: STA and SoftAP. AMAC address of the STA is different from a MAC address of the SoftAP.

When the repeater serves as the STA, the repeater can receive only data of an upper-level route, and only a single user (single user, SU) frame or a trigger based (trigger based, TB) frame is used for backhaul. When the repeater serves as the AP, the repeater can transmit data only with a lower-level STA or SoftAP. The two entities cannot work together when the two entities work in a same frequency and on a same channel.

Such a networking structure needs to occupy an air interface twice, reducing a capacity of an entire network. In addition, the repeater needs to create the two physical entities, increasing an area of a chip and power consumption of the chip.

In view of disadvantages of the existing dual-entity networking solution, this application provides a new single-entity networking solution. In this solution, each entity needs only one MAC address, a role of the entity can be freely switched, and a parent node allocates an association identifier (association identifier, AID) code to a child node, to ensure that AIDs does not conflict with each other. In addition, a single-entity AP may receive an orthogonal frequency division multiple access (orthogonal frequency division multiple access, OFDMA) frame or a hybrid frame of OFDMA and multi-user multiple-input multiple-output (multi-user multiple-input multiple-output, MUMIMO). This improves a throughput and forwarding efficiency of a network, and further improves a system capacity.

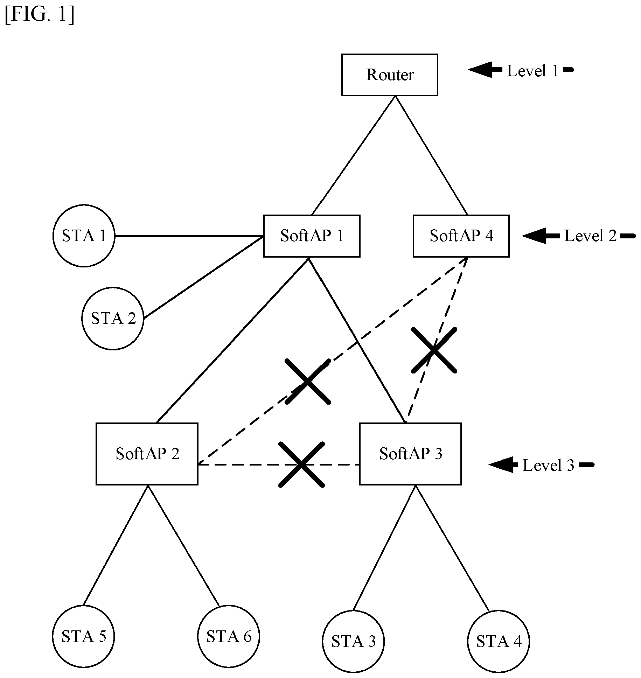

FIG. 1 is a diagram of a network structure according to an embodiment of this application. A wireless local area network with a tree structure shown in FIG. 1 may include a router (router), one or more SoftAPs (which may also be referred to as APs, and the AP is used as an example for description below) associated with the router, and one or more STAs and/or one or more APs associated with the AP. Specifically, as shown in FIG. 1, the router located at a level 1 is downlink associated with an AP 1 and an AP 4 that are located at a level 2, and the AP 1 is downlink associated with a STA 1 and a STA 2, and is also associated with an AP 2 and an AP 3 that are located at a level 3. The AP 2 is downlink associated with a STA 5 and a STA 6, and the AP 3 is downlink associated with a STA 3 and a STA 4. APs mentioned in FIG. 1 may serve as both APs and STAs. APs at a same level cannot be connected to each other for networking, and only APs at different levels can be connected to each other. In addition, an AP can be connected to only one upper-level AP. That is, the AP 1 and the AP 4 that are located at the level 2 are not connected to each other, and the AP 2 and the AP 3 that are located at the level 3 are not connected to each other. In addition, because the AP 2 and the AP 1 are already connected to each other, the AP 2 is not connected to the AP 4. Similarly, the AP 3 is not connected to the AP 4. A STA can be connected to only one AP, and cannot be connected to a plurality of APs. That is, after being connected to the AP 1, the STA 1 cannot be connected to another AP. Similarly, the STA 2 can be connected only to the AP 1, the STA 5 and the STA 6 can be connected only to the AP 2, and the STA3 and the STA4 can be connected only to the AP 3. In this way, an entire wireless mesh (Mesh) network may form a tree-structure network by using this limitation.

It should be understood that, in a network architecture of this application, a repeater has only one entity, that is, may serve as both an AP and a STA, and may flexibly switch between different roles.

It can be seen from FIG. 1 that the router belongs to the level 1 (level 1), the AP 1 belongs to the level 2 (level 2), and the AP 2 and the AP 3 belong to the level 3 (level 3).

It should be understood that FIG. 1 is merely an example, and does not constitute a limitation on a network architecture of a wireless local area network applicable to this application. For example, the network architecture may further include more routers, each router is downlink associated with more SoftAPs, and each SoftAP is downlink associated with more STAs; or some network architectures may alternatively not include a STA or the like. This is not limited in embodiments of this application.

For ease of understanding embodiments of this application, the following descriptions are provided.
1. In the following text descriptions or accompanying drawings in embodiments of this application, terms such as "first" and "second" and various numbers are merely used for differentiation for ease of description, and are not used to describe a specific order or sequence, but are not intended to limit the scope of embodiments of this application, for example, are used to distinguish different identifiers.
2. In the following embodiments of this application, terms such as "include", "have", and any other variants thereof are intended to cover non-exclusive inclusion, for example, a process, method, system, product, or device that includes a series of steps or units is not necessarily limited to those steps or units that are expressly listed, but may include another inherent step or unit not expressly listed or inherent to such a process, method, product, or device.
3. In embodiments of this application, terms such as "example" and "for example" represent giving an example, an illustration, or a description. An embodiment or a design scheme described as an "example" or "for example" should not be explained as being more preferred or having more advantages than another embodiment or design scheme. The word such as "example" or "for example" is intended to present a related concept in a specific manner for ease of understanding.
4. In embodiments of this application, a device may also be referred to as a node or a node device, and a sending device may be referred to as a sending node, a sending end, a source node, or a parent node. Similarly, a receiving device may be referred to as a receiving side device, a receive end, a sink node, or a child node.

For ease of understanding embodiments of this application, the following first describes several nouns or terms in this application.
1. Orthogonal frequency division multiple access (OFDMA) is a multiple access technology that allows a user to access a system by sharing frequency band resources through OFDMA.
2. Multi-user multiple-input multiple-output (MUMIMO) means that, in a wireless communication system, one base station serves a plurality of mobile terminals at the same time, and base stations communicate with a plurality of users at the same time by fully utilizing space domain resources of antennas.
3. A media access control address (media access control address, MAC address) is an address used to determine a location of a network device. In an open system interconnection (open system interconnection, OSI) reference model, a network layer at a third layer is responsible for an internet protocol (internet protocol, IP) address, and a data link layer at a second layer is responsible for the MAC address.

In this application, unless otherwise specified, for same or similar parts in embodiments, refer to each other. In embodiments of this application and implementations/methods/implementation methods in embodiments, unless otherwise specified or there is a logical conflict, terms and/or descriptions are consistent and may be mutually referenced between different embodiments and between the implementations/methods/implementation methods in embodiments. Technical features in different embodiments and the implementations/methods/implementation methods in embodiments may be combined to form a new embodiment, implementation, method, or implementation method based on an internal logical relationship of the technical features. The following implementations of this application are not intended to limit the protection scope of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatuses provided in embodiments of this application may also correspondingly implement these features or functions. Details are not described herein.

To facilitate understanding of a communication method provided in this application, the communication method provided in this application is first described in detail with reference to the accompanying drawings. That a sending device performs data transmission with a receiving device may include: The sending device sends downlink data to the receiving device (downlink communication), and the receiving device sends uplink data to the sending device (uplink communication). In other words, the communication method provided in this application is applicable to uplink and downlink data transmission. The following describes in detail the communication method provided in embodiments of this application by using an interaction process between one sending device and N receiving devices as an example.

The technical solutions provided in this application are described in detail below with reference to the accompanying drawings.

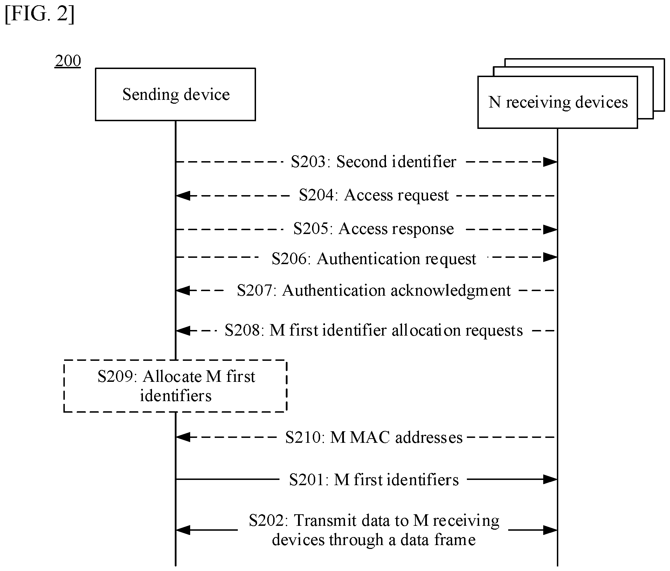

FIG. 2 is a schematic interaction flowchart of a communication method 200 according to an embodiment of this application. The method may be applied to a scenario shown in FIG. 1. For example, a sending device in FIG. 2 may be a router, and a corresponding receiving device is an AP. Alternatively, the sending device may be an AP, and the corresponding receiving device is an AP or a STA. Specifically, the method includes the following steps.

S201: The sending device sends M first identifiers to M receiving devices in N receiving devices.

Specifically, in this embodiment, the sending device is connected to the N receiving devices, and there is no connection relationship between the N receiving devices. When the M receiving devices in the N receiving devices need to communicate with the sending device, the sending device sends, to the M receiving devices, the first identifiers corresponding to the M receiving devices. M is an integer less than or equal to N.

It should be understood that the first identifier is a unique identifier used when the sending device performs data transmission with the receiving device.

In an implementation, the first identifier is an association identifier (association identifier, AID) code. Demodulation is not required at a physical layer by using the AID code, thereby improving data transmission efficiency.

S202: The sending device performs data transmission with the M receiving devices through a data frame.

Specifically, when the sending device performs downlink data transmission with the M receiving devices, the sending device sends, through the data frame, downlink data to the M receiving devices; or when the sending device performs uplink data transmission with the M receiving devices, the sending device receives, through the data frame, uplink data sent by the M receiving devices.

Optionally, the data frame is a frequency division multiplexing data frame.

In an implementation, a frame format of the data frame in this embodiment of this application includes but is not limited to an orthogonal frequency division multiple access OFDMA frame format and a frame format combining OFDMA and multi-user multiple-input multiple-output MUMIMO. A network throughput can be improved through the data frame in the frequency division multiplexing frame format.

According to the communication method provided in this embodiment of this application, the sending device allocates the first identifiers to the receiving devices. This can ensure that the first identifiers of all devices in a system do not conflict with each other. In addition, in a mesh network in this application, devices are single-entity nodes, each device corresponds to only one identifier used for data transmission, and a plurality of sets of MAC addresses and transceivers are not required, thereby improving forwarding efficiency. In addition, bidirectional data transmission from the sending device to the receiving devices can be implemented based on the data frame. Therefore, the network throughput and a system capacity can be improved.

Optionally, before S202, the method further includes an access process and an identity authentication process that are of the M receiving devices, and specifically includes the following plurality of steps.

S203: The sending device sends a second identifier to the M receiving devices.

Specifically, the second identifier is an identifier corresponding to the sending device. That is, when sending uplink data to the receiving device, the M receiving devices determine the sending device based on the second identifier. After receiving the second identifier corresponding to the sending device, the M receiving devices may determine a connected sending device based on the second identifier.

In an implementation, the second identifier is sent by the sending device by sending a beacon (beacon) broadcast management frame, that is, the beacon broadcast management frame sent by the sending device includes the second identifier.

S204: The M receiving devices send an access request to the sending device.

Specifically, the M receiving devices send a probe request frame to the sending device, to send the access request.

S205: The sending device sends an access response to the M receiving devices.

Specifically, the sending device sends the access response to the M receiving devices, to respond to the access request of the M receiving devices.

S206: The sending device sends an authentication request to the M receiving devices.

Specifically, the sending device requests to perform identity authentication (authentication) on the M receiving devices.

S207: The M receiving devices send an authentication acknowledgment to the sending device.

Specifically, the M receiving devices respond to an identity authentication request of the sending device.

S208: The M receiving devices send a first identifier allocation request to the sending device.

Specifically, after the M receiving devices complete access by using S203 to S207, the M receiving devices each send the first identifier allocation request to the sending device, where M first identifier allocation requests are used to separately request the first identifiers corresponding to the receiving devices from the sending device.

S209: The sending device allocates the M first identifiers to the M receiving devices.

Specifically, after receiving the first identifier allocation requests of the M receiving devices, the sending device may randomly generate M different first identifiers, for example, AID codes, and send M AID codes to the receiving devices.

In an implementation, the sending device sends a correspondence between the M receiving devices and the M identifiers to each of the M receiving devices. The correspondence may be in a form of, for example, a table. This is not limited in this application.

In another implementation, the sending device sends the M identifiers to the receiving devices, and sends a correspondence between a receiving device and a first identifier corresponding to the receiving device.

It should be noted that S203 to S207 are merely used as possible manners for brief description. For specific detailed descriptions, refer to a Wi-Fi authentication process in a related protocol. Details are not described herein.

S210: The M receiving devices report M MAC addresses to the sending device.

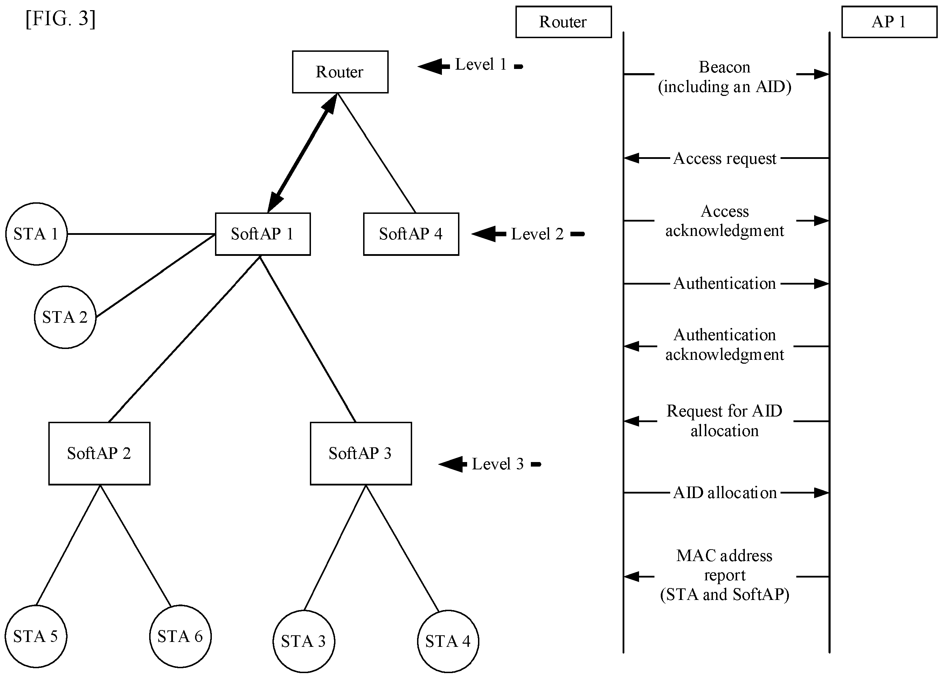

The following specifically describes the communication method provided in this application with reference to FIG. 3 to FIG. 7.

FIG. 3 is a first diagram of network association according to an embodiment of this application. In a mesh network shown in FIG. 3, when a router performs data transmission with an AP 1, the router needs to allocate an AID to the AP 1, and when data is to be sent, the AID is used for user matching. In other words, in the diagram of network association shown in FIG. 3, a sending device is the router, and a receiving device is the AP 1.

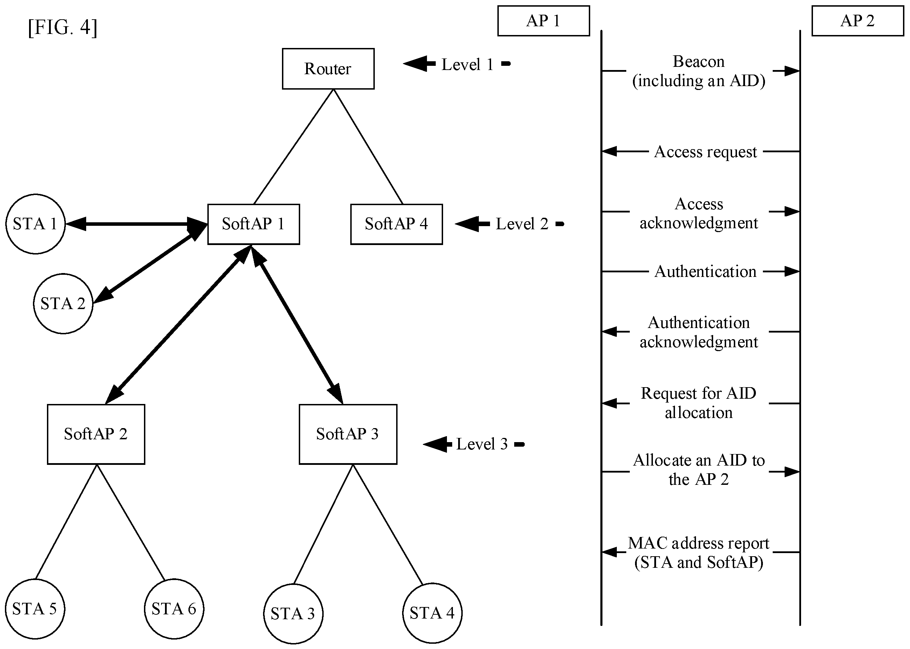

FIG. 4 is a second diagram of network association according to an embodiment of this application. As shown in FIG. 4, an AP 1 is associated with an AP 2 and an AP 3, and is also associated with a STA 1 and a STA 2. Specifically, the AP 1 may send an AID code of the AP 1 to at least one of the AP 2, the AP 3, the STA 1, and the STA 2 through a beacon management frame, and allocate an AID code to at least one of the AP 2, the AP 3, the STA 1, and the STA 2. When obtaining the AID code, at least one of the AP 2, the AP 3, the STA 1, and the STA 2 may communicate with the AP 1 based on the obtained corresponding AID code. It should be understood that AID codes of the AP 2, the AP 3, the STA 1, and the STA 2 are allocated by the AP 1. Therefore, a case in which the AIDs of the STA 1, the STA 2, the AP 2, and the AP 3 conflict with each other does not occur.

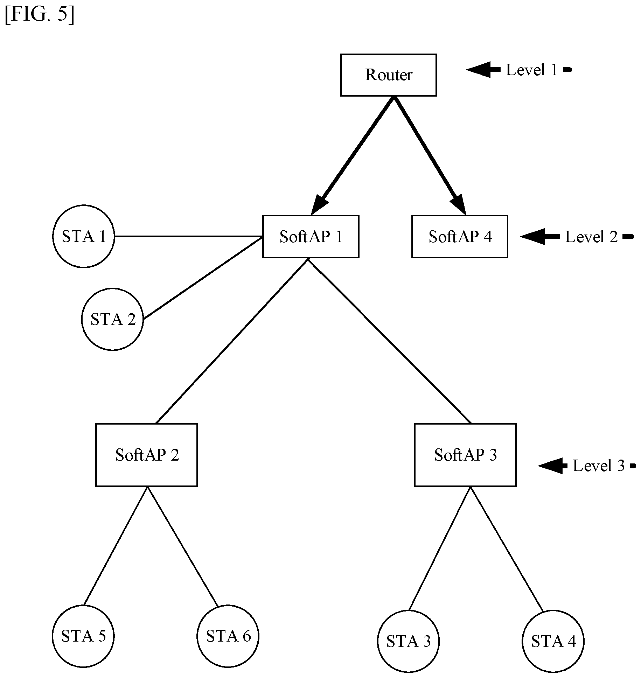

FIG. 5 is a first diagram of a structure of data communication according to an embodiment of this application.

It should be understood that an AP in a mesh network provided in this application may send an orthogonal frequency division multiple access frame, and may also receive an OFDMA frame. That is, as shown in FIG. 5, when a router needs to send data to an AP 1 and an AP 4, the router may send the data to both the AP 1 and the AP 4 through an OFDMA frame.

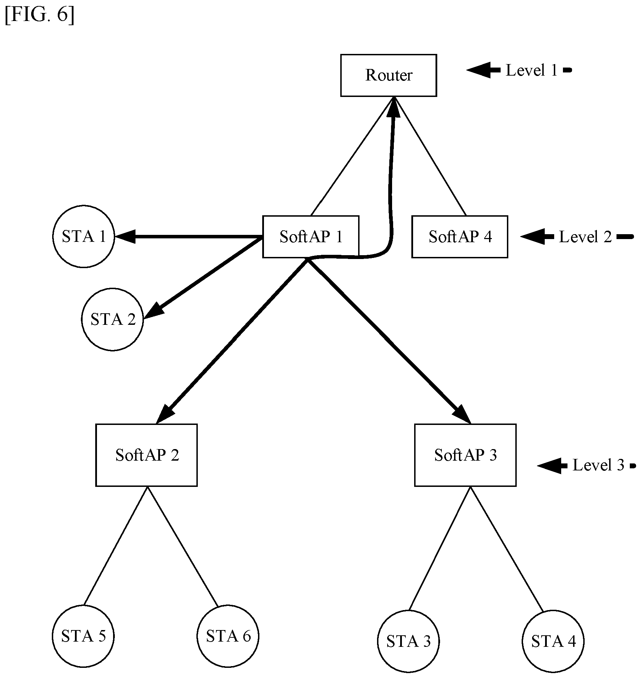

FIG. 6 is a second diagram of a structure of data communication according to an embodiment of this application. Specifically, as shown in FIG. 6, when an AP 1 has buffered data that needs to be backhauled, the AP 1 may simultaneously send the data to an upper-level AP (namely, a router), a STA (including at least one of a STA 1 and a STA 2) associated with the AP 1, and a lower-level AP (namely, at least one of an AP 2 and an AP 3) through an OFDMA frame. In other words, the AP 1 may backhaul the buffered data that is to be sent to the router through the OFDMA frame. At the same time, the AP 1 may forward, to the STA 1 and/or the STA 2, data that is to be sent to the STA 1 and/or the STA 2 by the router. Similarly, the AP 1 may forward, to the AP 2 and/or the AP 3, data that is to be sent to the AP 2 and/or the AP 3 by the router at the same time.

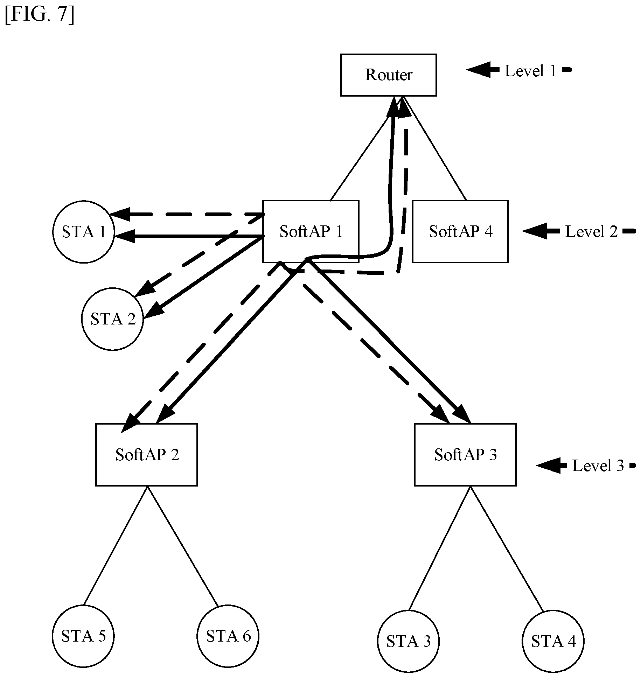

FIG. 7 is a third diagram of a structure of data communication according to an embodiment of this application. Specifically, as shown in FIG. 7, when an AP 1 has buffered data that needs to be backhauled, the AP 1 may not be limited to a case in which a single transmission frequency is used shown in FIG. 6, and may use a multi-connection technology, for example, send data through an OFDMA frame in both a 2.4 GHz band and a 5 GHz band. Data on the two frequencies may be associated or independent. If the data is independent data, data concatenation may be implemented at a higher layer by a receive end, to implement the multi-connection technology and improve data reliability and a throughput.

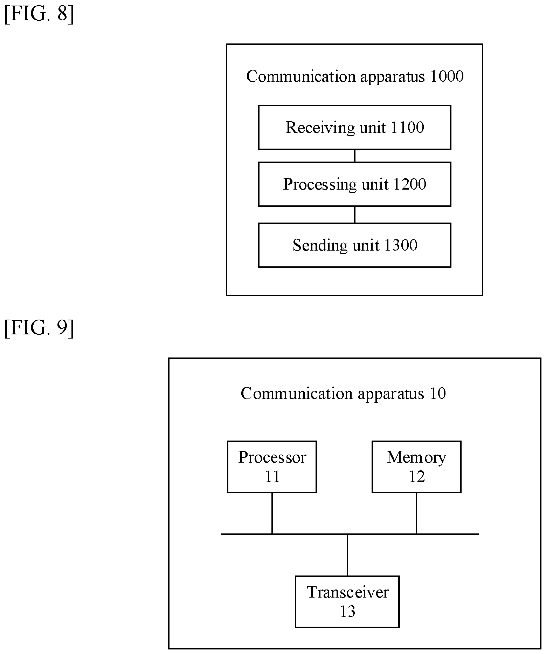

FIG. 8 is a block diagram of a communication apparatus 1000 according to this application. As shown in FIG. 8, the communication apparatus 1000 includes a receiving unit 1100, a processing unit 1200, and a sending unit 1300. The receiving unit 1100, the processing unit 1200, and the sending unit 1300 may also be respectively referred to as a receiving module 1100, a processing module 1200, and a sending module 1300. The units/modules in the communication apparatus are configured to perform corresponding steps in the method in the method embodiments of this application.

A function of the processing unit 1200 may be implemented by using hardware, or may be implemented by executing corresponding software by hardware. For example, the processing unit may include a memory and a processor. The memory is configured to store a computer program, and the processor reads and executes the computer program stored in the memory, to enable the communication apparatus 1000 to perform operations and/or processing performed by the sending device in the method embodiments. Optionally, the processing apparatus may include only the processor, and the memory configured to store the computer program is located outside the processing apparatus. The processor is connected to the memory via a circuit/wire, to read and execute the computer program stored in the memory. For another example, the processing apparatus may be a chip or an integrated circuit.

Optionally, in an implementation in which the communication apparatus 1000 may be a chip or an integrated circuit installed in a sending device, the sending unit 1300 and the receiving unit 1100 each may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

The apparatus 1000 may be configured to perform actions performed by the sending device or the receiving device in the foregoing method embodiments. In this case, the apparatus 1000 may be a component of the sending device or the receiving device, the receiving unit 1100 is configured to perform receiving-related operations of the sending device or the receiving device in the foregoing method embodiments, the processing unit 1200 is configured to perform processing-related operations of the sending device or the receiving device in the foregoing method embodiments, and the sending unit 1300 is configured to perform sending-related operations of the sending device or the receiving device in the foregoing method embodiments.

In a design, the apparatus 1000 is configured to perform actions performed by any device in the foregoing method embodiments. In an embodiment, the communication apparatus may be configured to perform operations of the sending device in FIG. 2. An example is as follows:

The sending unit 1300 is configured to send M first identifiers to M receiving devices in N receiving devices, where the M first identifiers one-to-one correspond to the M receiving devices, the M first identifiers identify the M receiving devices, the N receiving devices include the M receiving devices, N is an integer greater than or equal to 1, and M is a positive integer less than or equal to N, and the sending unit 1300 is further configured to: when the apparatus 1000 transmits downlink data to the M receiving devices, send the downlink data to the M receiving devices.

The receiving unit 1100 is configured to: when the apparatus 1000 transmits uplink data to the M receiving devices, receive the uplink data sent by the M receiving devices.

The processing module 1200 is configured to allocate, to each of the M receiving devices, the first identifier corresponding to the receiving device.

It should be understood that a specific process in which the modules perform the foregoing corresponding steps has been described in detail in the foregoing method embodiments. For brevity, details are not described herein again.

In addition, the receiving unit 1100, the processing unit 1200, and the sending unit 1300 in the communication apparatus 1000 may further implement other operations or functions of the sending device in the foregoing method. Details are not described herein again.

In another embodiment, the communication apparatus 1000 may be configured to perform operations of the receiving device in FIG. 2. An example is as follows:

The receiving module 1100 is configured to receive a first identifier from a sending device, where the first identifier corresponds to the communication apparatus 1000, and the first identifier identifies the communication apparatus 1000, and the receiving module 1100 is further configured to: when the apparatus 1000 transmits downlink data to the sending device, receive the downlink data sent by the sending device.

The sending unit 1300 is further configured to: when the apparatus 1000 transmits uplink data to the sending device, send the uplink data to the sending device.

In addition, the receiving unit 1100, the processing unit 1200, and the sending unit 1300 in the data transmission apparatus may further implement other operations or functions of the network device in the foregoing method. Details are not described herein again.

It should be understood that a specific process in which the modules perform the foregoing corresponding steps has been described in detail in the foregoing method embodiments. For brevity, details are not described herein again.

FIG. 9 is a diagram of a structure of a communication apparatus 10 according to this application. The apparatus 10 includes a processor 11, the processor 11 is coupled to a memory 12, the memory 12 is configured to store a computer program or instructions and/or data, and the processor 11 is configured to: execute the computer program or the instructions stored in the memory 12, or read the data stored in the memory 12, to perform the method in the foregoing method embodiments.

Optionally, there are one or more processors 11.

Optionally, there are one or more memories 12.

Optionally, the memory 12 and the processor 11 are integrated together or separately disposed.

Optionally, as shown in FIG. 9, the apparatus 10 further includes a transceiver 13, and the transceiver 13 is configured to receive and/or send a signal. For example, the processor 11 is configured to control the transceiver 13 to receive and/or send the signal.

In addition, this application further provides a computer-readable storage medium. The computer-readable storage medium stores computer instructions. When the computer instructions are run on a computer, the method in the method embodiments of this application is performed.

This application further provides a computer program product. The computer program product includes computer program code or instructions. When the computer program code or the instructions are run on a computer, the method in the method embodiments of this application is performed.

In addition, this application further provides a chip, and the chip includes a processor. A memory configured to store a computer program is disposed independent of the chip. The processor is configured to execute the computer program stored in the memory, so that the method in the method embodiments of this application is performed.

Further, the chip may further include a communication interface. The communication interface may be an input/output interface, an interface circuit, or the like. Further, the chip may further include the memory.

It should be understood that the processor in this embodiment of this application may be an integrated circuit chip, and has a signal processing capability. In an implementation process, steps in the foregoing method embodiments can be implemented by using a hardware integrated logic circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the method disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

The memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising: sending, by a sending device, M first identifiers to M receiving devices in N receiving devices, wherein the M first identifiers one-to-one correspond to the M receiving devices, the M first identifiers identify the M receiving devices, the N receiving devices comprise the M receiving devices, N is an integer greater than or equal to 1, and M is a positive integer less than or equal to N; and
transmitting, by the sending device through a data frame, data to the M receiving devices corresponding to the M first identifiers, wherein the sending device is communicatively connected to the N receiving devices, and the N receiving devices are not communicatively connected to each other.

2. The method according to claim 1, wherein the first identifier is an association identifier AID code.

3. The method according to claim 1 or 2, wherein the data frame is a frequency division multiplexing data frame.

4. The method according to any one of claims 1 to 3, wherein
a frame format of the data frame comprises an orthogonal frequency division multiple access OFDMA frame format and a frame format combining OFDMA and multi-user multiple-input multiple-output MUMIMO.

5. The method according to any one of claims 1 to 4, wherein the method further comprises:
allocating, by the sending device to each of the M receiving devices, the first identifier corresponding to the receiving device.

6. The method according to any one of claims 1 to 5, wherein
the sending device is a routing device or an access point AP device.

7. The method according to any one of claims 1 to 6, wherein the method further comprises:
sending, by the sending device, a second identifier to the M receiving devices, wherein the second identifier is an identifier corresponding to the sending device.

8. A communication method, comprising:
receiving, by a receiving device, a first identifier from a sending device, wherein the first identifier corresponds to the receiving device, and the first identifier identifies the receiving device; and
transmitting, by the receiving device, data to the sending device through a data frame.

9. The method according to claim 8, wherein the first identifier is an association identifier AID code.

10. The method according to claim 8 or 9, wherein the data frame is a frequency division multiplexing data frame.

11. The method according to any one of claims 8 to 10, wherein
a frame format of the data frame comprises an orthogonal frequency division multiple access OFDMA frame format and a frame format combining OFDMA and multi-user multiple-input multiple-output MUMIMO.

12. The method according to any one of claims 8 to 11, wherein the first identifier is allocated by the sending device to the receiving device.

13. The method according to any one of claims 8 to 12, wherein
the receiving device is an access point AP device or a terminal STA device.

14. The method according to any one of claims 8 to 13, wherein the method further comprises:
receiving, by the receiving device, a second identifier from the sending device, wherein the second identifier is an identifier corresponding to the sending device.

15. A communication system, comprising a plurality of receiving devices, wherein
the plurality of receiving devices are communicatively connected to a sending device, the plurality of receiving devices are not communicatively connected to each other, and the plurality of receiving devices are configured to perform the method according to any one of claims 8 to 14.

16. A data transmission apparatus, comprising a module or a unit configured to perform the method according to any one of claims 1 to 14.

17. A data transmission apparatus, wherein the apparatus comprises a processor, the
processor is coupled to a memory, the memory stores instructions, and when the instructions are run by the processor,
the processor is enabled to perform the method according to any one of claims 1 to 7, or
the processor is enabled to perform the method according to any one of claims 8 to 14.

18. A data transmission apparatus, wherein the apparatus comprises a logic circuit and an input/output interface, and the logic circuit is configured to: be coupled to the input/output interface, and transmit data through the input/output interface, to perform the method according to any one of claims 1 to 7, or perform the method according to any one of claims 8 to 14.

19. A computer-readable storage medium, wherein the computer-readable storage medium is configured to store a computer program, and when the computer program runs on a computer, the computer is enabled to perform the method according to any one of claims 1 to 7, or the computer is enabled to perform the method according to any one of claims 8 to 14.

20. A computer program product, wherein the computer program product comprises computer program code, and when the computer program code is run, the method according to any one of claims 1 to 7 or the method according to any one of claims 8 to 14 is implemented.

21. A chip, comprising a processor and a memory, wherein the memory is configured to store a computer program, and the processor is configured to invoke and run the computer program stored in the memory, to perform the method according to any one of claims 1 to 7, or implement the method according to any one of claims 8 to 14.

## Amended claims

### Amended claims in accordance with Rule 137(2) EPC.

1. A communication method, wherein the method is applied to a distributed unit DU, and the method comprises:
receiving uplink data from a terminal device;
allocating a first cell radio network temporary identifier C-RNTI and a first DU interface identifier to the terminal device;
sending a first message to a central unit CU, wherein the first message comprises the first C-RNTI and the first DU interface identifier; and
receiving a second message from the CU, wherein the second message comprises the first C-RNTI or the first DU interface identifier.

2. The method according to claim 1, wherein the terminal device is in a radio resource control RRC idle mode or an RRC inactive mode.

3. The method according to claim 1 or 2, wherein the method further comprises:
before receiving the uplink data, storing, by the DU, context information of the terminal device, wherein the context information comprises a second C-RNTI; and
after receiving the second message, updating the second C-RNTI to the first C-RNTI.

4. The method according to any one of claims 1 to 3, wherein the method further comprises:
after receiving the second message, deleting the first DU interface identifier, or updating the second DU interface identifier to the first DU interface identifier.

5. The method according to claim 3, wherein when the second message comprises the first DU interface identifier, the updating the second C-RNTI to the first C-RNTI specifically comprises:
determining the first C-RNTI based on the first DU interface identifier; and
updating the second C-RNTI to the first C-RNTI.

6. The method according to claim 4, wherein when the second message comprises the first C-RNTI, the deleting the first DU interface identifier, or updating the second DU interface identifier to the first DU interface identifier specifically comprises:
determining the first DU interface identifier based on the first C-RNTI; and
deleting the first DU interface identifier, or updating the second DU interface
identifier to the first DU interface identifier.

7. The method according to any one of claims 3 to 6, wherein the context information further comprises the second DU interface identifier.

8. The method according to any one of claims 1 to 7, wherein the receiving uplink data from a terminal device specifically comprises:
receiving the uplink data from the terminal device in a random access process.

9. The method according to any one of claims 1 to 8, wherein the first message further comprises an RRC resume request message, and the uplink data comprises the RRC resume request message.

10. The method according to any one of claims 7 to 9, wherein the second message further comprises the second DU interface identifier and a second CU interface identifier, and the second CU interface identifier is stored in the context information.

11. The method according to any one of claims 7 to 9, wherein the second message is a context modification request message.

12. The method according to claim 11, wherein the method further comprises: sending a context modification response message to the CU.

13. The method according to any one of claims 1 to 12, wherein the method further comprises: before receiving the uplink data, receiving an RRC release message and indication information from the CU, wherein the indication information indicates the DU to store the context information of the terminal device; and
sending the RRC release message to the terminal device.

14. A communication method, comprising:
receiving, by a distributed DU, uplink data from a terminal device;
allocating, by the DU, a first cell radio network temporary identifier C-RNTI and a first DU interface identifier to the terminal device;
sending, by the DU, a first message to a central unit CU, wherein the first message comprises the first C-RNTI and the first DU interface identifier; and
sending, by the CU, a second message to the DU, wherein the second message comprises the first C-RNTI or the first DU interface identifier.

15. The method according to claim 14, wherein the terminal device is in a radio resource control RRC idle mode or an RRC inactive mode.

16. The method according to claim 14 or 15, wherein the method further comprises:
before receiving the uplink data, storing, by the DU, context information of the terminal device, wherein the context information comprises a second C-RNTI; and
after receiving the second message, updating, by the DU, the second C-RNTI to the first C-RNTI.

17. The method according to any one of claims 14 to 16, wherein the method further comprises:
after receiving the second message, deleting, by the DU, the first DU interface identifier, or updating the second DU interface identifier to the first DU interface identifier.

18. The method according to claim 16, wherein when the second message comprises the first DU interface identifier, the updating the second C-RNTI to the first C-RNTI specifically comprises:
determining, by the DU, the first C-RNTI based on the first DU interface identifier; and
updating, by the DU, the second C-RNTI to the first C-RNTI.

19. The method according to claim 17, wherein when the second message comprises the first C-RNTI, the deleting the first DU interface identifier, or updating the second DU interface identifier to the first DU interface identifier specifically comprises:
determining, by the DU, the first DU interface identifier based on the first C-RNTI; and
deleting, by the DU, the first DU interface identifier, or updating the second DU interface identifier to the first DU interface identifier.

20. The method according to any one of claims 16 to 19, wherein the context information further comprises the second DU interface identifier.

21. The method according to any one of claims 14 to 20, wherein the receiving, by a DU, uplink data from a terminal device specifically comprises:
receiving, by the DU, the uplink data from the terminal device in a random access process.

22. The method according to any one of claims 14 to 21, wherein the first message further comprises an RRC resume request message, and the uplink data comprises the RRC resume request message.

23. The method according to any one of claims 20 to 22, wherein the second message further comprises the second DU interface identifier and a second CU interface identifier, and the second CU interface identifier is stored in the context information.

24. The method according to any one of claims 20 to 22, wherein the second message is a context modification request message.

25. The method according to claim 24, wherein the method further comprises:
sending, by the DU, a context modification response message to the CU.

26. The method according to any one of claims 14 to 25, wherein the method further comprises:
before the DU receives the uplink data, sending, by the CU, an RRC release message and indication information to the DU, wherein the indication information indicates the DU to store the context information of the terminal device; and
sending, by the DU, the RRC release message to the terminal device.

27. A communication apparatus, comprising a module configured to perform the method according to any one of claims 1 to 13 or a module configured to perform the method according to any one of claims 14 to 26.

28. A communication apparatus, comprising a processor and a memory, wherein the processor is coupled to the memory, and the processor is configured to control the apparatus to implement the method according to any one of claims 1 to 13, or control the apparatus to implement the method according to any one of claims 14 to 26.

29. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement, by using a logic circuit or executing code instructions, the method according to any one of claims 1 to 13 or the method according to any one of claims 14 to 26.

30. A computer-readable storage medium, wherein the storage medium stores a computer program or instructions, and when the computer program or the instructions are executed by a communication apparatus, the method according to any one of claims 1 to 13 or the method according to any one of claims 14 to 26 is implemented.
